# EUROPÄISCHE PATENTSCHRIFT

(11) **EP 3 774 289 B1**
(45) Veröffentlichungstag und Bekanntmachung des Hinweises auf die Patenterteilung: **08.06.2022**
(21) Anmeldenummer: 18718401.5
(22) Anmeldetag: 05.04.2018
(51) Int. Cl.: B29C 64/171, B29C 64/124, B33Y 10/00, B33Y 30/00, B29C 64/40, B29C 64/357, B29C 64/232

(54) **VERFAHREN UND ANORDNUNG ZUR KONTINUIERLICHEN ODER QUASIKONTINUIERLICHEN GENERATIVEN FERTIGUNG VON BAUTEILEN**
METHOD AND ASSEMBLY FOR A CONTINUOUS OR SEMI-CONTINUOUS ADDITIVE MANUFACTURE OF COMPONENTS
PROCÉDÉ ET DISPOSITIF POUR LA FABRICATION ADDITIVE CONTINUE OU QUASI CONTINUE DE PIÈCES

(43) Veröffentlichungstag der Anmeldung: 17.02.2021
(73) Patentinhaber: Fraunhofer-Gesellschaft zur Förderung der angewandten Forschung e.V., 80686 München (DE)
(72) Erfinder: LEONARDS, Holger, 50968 Köln (DE); HOFFMANN, Andreas, 52064 Aachen (DE); GILLNER, Arnold, 52159 Roetgen (DE); NOTTRODT, Oliver, 52074 Aachen (DE)
(74) Vertreter: Gagel, Roland
(86) Internationale Anmeldenummer: PCT/EP2018/058705
(87) Internationale Veröffentlichungsnummer: WO 2019/192700

(56) Entgegenhaltungen:
- WO-A1-2016/008876
- WO-A2-2012/140658
- DE-A1-102013 021 891
- DE-A1-102016 201 824
- US-A1- 2017 334 140

## Beschreibung

### Technisches Anwendungsgebiet

Die vorliegende Erfindung betrifft ein Verfahren und eine Anordnung zur generativen Fertigung von Bauteilen, bei denen die Bauteile durch schichtweise Verfestigung eines Aufbaumaterials aufgebaut werden, das sich durch chemische Reaktion von einer flüssigen in eine erste feste Phase überführen lässt, wobei die schichtweise Verfestigung unter Bildung der ersten festen Phase jeweils durch ortsselektive Bestrahlung einer Schicht der flüssigen Phase des Aufbaumaterials entsprechend der Bauteilgeometrie erfolgt.

Die generative Fertigung von Bauteilen, auch als additive Fertigung bezeichnet, spielt in vielen technischen Gebieten inzwischen eine wichtige Rolle, da mit diesem Verfahren auch funktionsfähige Bauteile erzeugt werden können. Bei der generativen Fertigung wird das Bauteil ausgehend von einem CAD-Modell (CAD: Computer-Aided Design) digital in Schichten zerteilt und im anschließenden Fertigungsprozess Schicht für Schicht aufgebaut. Für diesen Aufbau sind unterschiedliche Techniken bekannt, die sich in physikalische und chemische bzw. photochemische Verfahren einteilen lassen.

Die additive Fertigung ist derzeit lediglich für kleine Losgrößen von ca. 1 bis 1000 Stück/Jahr und individuelle Produkte, Modelle oder Prototypen im Einsatz. Mit Technologien für sehr große Stückzahlen (>> 1000), wie beispielsweise Spritzguss, können die additiven Fertigungsverfahren nicht konkurrieren. Zwischen Losgröße 1 und Serienfertigung gibt es jedoch einen Bereich der Sortenfertigung (gleiches Material aber variierende Geometrie), der weder durch die additiven Fertigungsverfahren noch durch formgebende Werkzeugverfahren wie beispielsweise Spritzguss sinnvoll abgedeckt wird. Die bisher bekannten additiven Fertigungsverfahren sind für diese Anwendung zu langsam und zu teuer. Werkzeuge für formgebende Verfahren sind für kleine Stückzahlen ebenfalls sehr teuer.

### Stand der Technik

Einige bekannte additive Verfahren nutzen die physikalischen Prozesse des Schmelzens und Erstarrens zur Erzeugung der dreidimensionalen Bauteile. Beispiele sind insbesondere das FDM (Fused Deposition Modelling) und das SLM/SLS (Selective Laser Melting/Sintering). Beim FDM werden thermoplastische Kunststoffe in Form eines Filaments in eine Düsenvorrichtung gefördert, durch Zuführung von thermischer Energie geschmolzen und dann selektiv als geschmolzener Faden abgelegt. Durch Abkühlen erhält der Thermoplast anschließend wieder seine Festigkeit und das dreidimensionale Bauteil wird aufgebaut. Beim SLM/SLS werden thermoplastische Kunststoffe oder auch andere Materialien mit einem Laserstrahl selektiv geschmolzen. Das Ausgangsmaterial wird in Form eines Pulvers aufgebracht. Bei der Fertigung wird jeweils ein Bereich der aufgebrachten Pulverschicht geschmolzen bzw. gesintert und verfestigt sich dann durch Abkühlung, der der Schicht des fertigen Bauteils im CAD-Modell entspricht. Nach jeder Schicht wird durch eine Rakel eine neue Pulverschicht aufgetragen und mit dem nächsten Prozessschritt erneut ortsselektiv geschmolzen. Nach dem Prozess kann das verbliebene Pulver vom Bauteil entfernt werden.

Bei den chemischen oder photochemischen Verfahren wird die Verfestigung des dreidimensionalen Bauteils durch eine chemische Reaktion (chemisches Aushärten, Polymerisieren, Vernetzen) erreicht. Die einzelnen Schichten des Bauteils werden dabei durch ortsselektives, photoinduziertes Aushärten des photosensitiven Aufbaumaterials, z.B. eines Photoharzes, erzeugt. Die bekanntesten photochemischen Verfahren sind die Stereolithographie (SLA), bei dem das ortselektive Aushärten durch einen Laserstrahl erfolgt, und projizierende Verfahren mit digitalen Spiegel- oder LCD-Anordnungen , die eine räumliche Lichtmodulation bewirken. Bei beiden Verfahrenstechniken erfolgt der Aufbau bisher an einer Bauplattform in einem Monomer-/Präpolymerbad, in welchem von der Oberseite oder von der Unterseite projiziert bzw. belichtet wird. Beide Verfahren nutzen in der Regel elektromagnetische Strahlung zur Härtung des Aufbaumaterials. Sie unterscheiden sich in der Art der selektiven Bestrahlung.

Zur Vermeidung zusätzlicher Stützstrukturen beim Aufbau der Bauteile ist aus der WO 2016/008876 A1 ein photochemisches Verfahren zur generativen Fertigung von Bauteilen bekannt, bei dem als Aufbaumaterial ein Material eingesetzt wird, das während der generativen Fertigung einen durch Abkühlung steuerbaren weiteren Phasenübergang zwischen der flüssigen Phase und einem festen Aggregatzustand als einer zweiten festen Phase durchführen kann, der die erste, photochemisch erzeugte feste Phase nicht beeinflusst. Der weitere Phasenübergang wird dann während des Aufbaus der Bauteile so gesteuert, dass unter Bildung der ersten festen Phase verfestigte Bauteilbereiche durch umgebendes Aufbaumaterial in der zweiten festen Phase gestützt werden. Die WO 2012/140658 A2 zeigt ein ähnliches Verfahren, bei dem das Aufbaumaterial aus einer Mischung eines Photopolymers mit einem Wachs besteht, durch das der Übergang in die zweite feste Phase bei Abkühlung ermöglicht wird. Nach jedem Bauprozess eines oder mehrerer nebeneinander angeordneter Bauteile muss jedoch bei beiden Verfahren die Bauplattform mit den darauf aufgebauten Bauteilen entnommen und eine neue Bauplattform eingesetzt werden. Dies ist ein zeitaufwändiger Prozess, der bisher den Einsatz derartiger Verfahren für eine Kleinserien- oder Sortenfertigung verhindert.

Die DE 10 2012 021 284 A1 beschreibt eine Vorrichtung sowie ein Verfahren zur additiven Fertigung von Bauteilen mittels Photopolymerisation, bei dem eine in einem Behältnis drehbar gelagerte Walze die Unterlage für den Aufbau der Bauteile bildet. Um die Walze herum sind mehrere Belichtungseinheiten zur Belichtung des flüssigen Aufbaumaterials angeordnet. Das Behältnis ist mit optisch transparenten Seiten in unterschiedlichem Abstand zur Mantelfläche der Walze ausgebildet. Die mehreren Belichtungseinheiten bilden mehrere Belichtungsstationen entlang der Umfangsrichtung der Walze. Die Vorrichtung ermöglicht eine kontinuierliche Fertigung der Bauteile. Allerdings sind bei diesem Verfahren Stützstrukturen für den Aufbau der Bauteile erforderlich. Der Aufbau an einer gekrümmten Baufläche sowie die Polymerisation an einer optisch transparenten Behältniswand sind zudem aufwändig und problembehaftet.

Aus der EP 2289462 A1 ist ein Verfahren zur generativen Fertigung von Bauteilen unter Nutzung eines Werkstoffpulvers bekannt. Bei diesem Verfahren werden aufeinanderfolgende Schichten in Schichtebenen aufgetragen, die schräg zu der Oberfläche der Bauplattform ausgerichtet sind. Dies ermöglicht ebenfalls eine kontinuierliche Fertigung der Bauteile.

Die Aufgabe der vorliegenden Erfindung besteht darin, ein Verfahren sowie eine Anordnung zur generativen Fertigung von Bauteilen anzugeben, die eine kontinuierliche oder quasikontinuierliche Fertigung der Bauteile ermöglichen und sich für eine Kleinserien- oder Sortenfertigung von Bauteilen aus einem Material bei unterschiedlichen Geometrien der Bauteile eignen.

### Darstellung der Erfindung

Die Aufgabe wird mit dem Verfahren und der Anordnung gemäß den Patentansprüchen 1 und 10 gelöst. Vorteilhafte Ausgestaltungen des Verfahrens sowie der Anordnung sind Gegenstand der abhängigen Patentansprüche oder lassen sich nachfolgenden Beschreibung sowie den Ausführungsbeispielen entnehmen.

Bei dem vorgeschlagenen Verfahren zur generativen Fertigung von Bauteilen werden die Bauteile durch schichtweise Verfestigung eines Aufbaumaterials in einer Aufbaurichtung aufgebaut, das sich durch eine chemische oder photochemische Reaktion von einer flüssigen in eine erste feste Phase überführen lässt. Das Aufbaumaterial weist hierzu eine zur Verfestigung bestimmende Materialkomponente auf, die sich entsprechend durch die chemische oder photochemische Reaktion von der flüssigen in die erste feste Phase überführen lässt. Das Aufbaumaterial kann alleine aus dieser Materialkomponente bestehen oder auch weitere Zusätze enthalten. Die schichtweise Verfestigung erfolgt dabei unter Bildung der ersten festen Phase jeweils durch ortsselektive, lokale Bestrahlung einer Schicht der flüssigen Phase des Aufbaumaterials entsprechend der Bauteilgeometrie. Durch diese Bestrahlung wird im bestrahlten Bereich die chemische oder photochemische Reaktion, insbesondere eine Vernetzungs- bzw. Polymerisationsreaktion, ausgelöst.

Bei dem vorgeschlagenen Verfahren wird das Aufbaumaterial, insbesondere die obige die Verfestigung bestimmende Materialkomponente des Aufbaumaterials, so gewählt, dass das Aufbaumaterial bzw. die die Verfestigung bestimmende Materialkomponente während der generativen Fertigung noch einen durch Abkühlung steuerbaren weiteren Phasenübergang zwischen der flüssigen Phase bzw. dem flüssigen Aggregatzustand und einem weiteren festen Aggregatzustand als einer zweiten festen Phase durchführen kann, der die erste feste Phase nicht beeinflusst. Der weitere Phasenübergang wird dann während des Aufbaus der Bauteile, d.h. während des Zeitraums vom Start bis zur Beendigung der Fertigung des jeweiligen Bauteils, so gesteuert, dass unter Bildung der ersten festen Phase verfestigte Bauteilbereiche durch umgebendes Aufbaumaterial gestützt werden, das in der zweiten festen Phase vorliegt. Damit sind während der generativen Fertigung die bereits verfestigten Bauteilbereiche bereits bei oder unmittelbar nach der Verfestigung - oder auch nach einer durch Wahl der äußeren Bedingungen einstellbaren Zeit - in festes Aufbaumaterial eingebettet, das in die zweite feste Phase überführt wurde. Durch dieses feste Aufbaumaterial werden die bereits verfestigten Bauteilbereiche gestützt, so dass keine Stützstrukturen oder zusätzliche Stützmaterialien erforderlich sind.

Diese Verfestigung des Aufbaumaterials durch Übergang in die zweite feste Phase ermöglicht eine Platzierung von Bauteilen im gesamten Volumen des Bauraums ohne Kontakt zu einer Bauplattform. Damit kann der Bauraum optimal ausgenutzt werden und somit die Anzahl der Bauteile je Druckprozess erhöht werden. Da sich der Phasenübergang zwischen der flüssigen und der zweiten festen Phase nicht auf die erste feste Phase auswirkt, können die fertiggestellten Bauteile anschließend in einfacher Weise vom verbliebenen Aufbaumaterial getrennt werden, das hierzu lediglich wieder von der zweiten festen in die flüssige Phase überführt werden muss. Das dann flüssige Aufbaumaterial kann einfach abtropfen oder durch unterstützende Maßnahmen, beispielsweise durch Erwärmen, vollständig von den Bauteilen getrennt und im Idealfall wiederverwertet werden. Eine vollständige Befreiung der Bauteile durch noch flüssiges Material kann durch ein Waschen mit entsprechenden Lösungsmitteln erfolgen.

Durch die Verfestigung des Aufbaumaterials durch Abkühlung entsteht ein Block verfestigten Aufbaumaterials mit den darin befindlichen verfestigten Bauteilbereichen. Unter einem Block verfestigten Aufbaumaterials ist in der vorliegenden Patentanmeldung ein Körper mit einer Dicke bzw. Höhe und konstanter Querschnittsfläche zu verstehen, wobei die Dicke bzw. Höhe des Blocks in Aufbaurichtung der Bauteile gemessen wird und sich während des generativen Fertigungsprozesses verändern kann. Bei dem vorgeschlagenen Verfahren wird nun dieser Block verfestigten Aufbaumaterials durch eine bezüglich der Aufbaurichtung seitlich am Block an- oder eingreifende Vorschubeinrichtung entgegen der Aufbaurichtung gefördert, um die Bauteile schichtweise aufzubauen. Diese Förderung durch seitlich am Block verfestigten Aufbaumaterials an- oder eingreifende Elemente der Vorschubeinrichtung ermöglicht einen ununterbrochenen schrittweisen oder kontinuierlichen Vorschub, durch den kontinuierlich neue Bauteile erzeugt werden können. Lediglich für den Start des Bauprozesses ist eine geeignete Unterlage, beispielsweise eine Platte aus durch Übergang in die zweite Phase verfestigtem Aufbaumaterial oder auch aus einem anderen Material erforderlich. Die Bauteile werden dann nach Bildung eines ausreichend dicken oder hohen Blocks verfestigten Aufbaumaterials durch kontinuierlichen Vorschub des Blocks kontinuierlich erzeugt. Die Bauteile werden dabei in Aufbaurichtung übereinander aufgebaut, wobei selbstverständlich jeweils auch mehrere Bauteile nebeneinander liegen können.

Der Begriff der Phase wird in der vorliegenden Patentanmeldung im Sinne eines klassischen Aggregatzustandes (fest, flüssig, gasförmig) verwendet, um flüssige und feste Zustände des Aufbaumaterials zu unterscheiden. So stellt beispielsweise ein Sol-Gel-Übergang keinen Phasenübergang im Sinne des vorgeschlagenen Verfahrens dar. Die unterschiedlichen Zustände bzw. Phasen können sich dabei nicht nur im Ordnungszustand sondern auch in der chemischen Verbindung unterscheiden.

Die Begriffe Strahlung beziehungsweise Bestrahlung inkludieren in der vorliegenden Patentanmeldung sowohl elektromagnetische Strahlung wie beispielsweise UV- oder visuelle Licht- oder Mikrowellenstrahlung als auch Teilchenstrahlung wie beispielsweise Elektronenstrahlung.

Vorzugsweise wird der Block verfestigten Aufbaumaterials mit den darin befindlichen Bauteilen hierbei von einer Temperaturzone, bei der das Aufbaumaterial in die zweite feste Phase übergeht bzw. in der zweiten festen Phase verbleibt, in eine Temperaturzone befördert, bei der das Aufbaumaterial aus der zweiten festen Phase wieder in die flüssige Phase übergeht und damit der Block aufgelöst wird und die Bauteile vom dann flüssigen Aufbaumaterial getrennt werden können.

Der Vorschub des Blocks verfestigten Aufbaumaterials durch seitliches An- oder Eingreifen von Elementen der Vorschubeinrichtung kann über unterschiedliche Technologien erfolgen. So können hierzu beispielsweise Bänder, Riemen, Greifer, Räder, Zahnräder, eine Schnecke usw. als Elemente der Vorschubeinrichtung eingesetzt werden. Die Aufbau- und somit auch die Förderrichtung verlaufen beim vorgeschlagenen Verfahren vorzugsweise vertikal oder nahezu vertikal. Grundsätzlich sind jedoch auch andere Aufbau- und Förderrichtungen für die Durchführung des vorgeschlagenen Verfahrens möglich.

Bei dem vorgeschlagenen Verfahren wird das Aufbaumaterial bzw. die darin enthaltene, die Verfestigung bestimmende Materialkomponente so gewählt, dass der weitere Phasenübergang durch Erhitzen und/oder Abkühlen erzeugt werden kann. Es handelt sich hierbei somit um den rein physikalischen Prozess des Schmelzens und Erstarrens. Damit wird dieser Phasenübergang je nach Umgebungstemperatur bei der generativen Fertigung und Schmelz- bzw. Erstarrungspunkt des Aufbaumaterials entweder durch Temperaturerhöhung von der zweiten festen Phase in die flüssige Phase oder durch Abkühlung von der flüssigen in die zweite feste Phase überführt. Der jeweils entgegen gesetzte Übergang kann je nach Umgebungstemperatur automatisch erfolgen, sobald nicht mehr gekühlt oder nicht mehr erhitzt wird. So kann beispielsweise das Aufbaumaterial für jede Schicht in bereits erhitzter Form flüssig aufgetragen werden und kühlt dann aufgrund einer niedrigeren Umgebungstemperatur unter Bildung der zweiten festen Phase automatisch ab. Die Abkühlung kann selbstverständlich auch durch explizite Kühlung beschleunigt werden. Besonders vorteilhaft wird ein Aufbaumaterial eingesetzt, das bei Raumtemperatur (20°C) flüssig ist. Der Übergang in die zweite feste Phase wird dann durch Kühlung erreicht.

Bevorzugt wird ein photo-vernetzbares Aufbaumaterial gewählt, beispielsweise ein aus mehreren Komponenten bestehender Photoharz, das durch Erhöhung oder Erniedrigung der Temperatur einen Phasenübergang von fest zu flüssig und umgekehrt realisieren kann. Dadurch kann dieses Aufbaumaterial steuer- bzw. einstellbar entweder als festes Stützmaterial oder als flüssiges Aufbaumaterial für das Bauteil verwendet werden.

Mögliche Materialklassen für das Aufbaumaterial bzw. die die Verfestigung bestimmende Materialkomponente sind Polymere, Präpolymere oder Monomere mit einer oder mehreren funktionellen Gruppen, wie Epoxide (Glycidylether), Acrylate, Methacrylate, Vinylether, Allylether, Thiole, Norbornene, Proteine sowie andere insbesondere biologische Stoffe, die bei Bestrahlung mit UV-Licht direkt und/oder in Kombination mit einem Photo-Initiator chemisch vernetzen oder polymerisieren. Zusätzlich können die verwendeten Aufbaumaterialien noch Füllstoffe wie z.B. Metallpulver, Keramikpulver, Fasern, Partikel, leitende Substanzen, oder noch Absorber, Inhibitoren, Initiatoren, Reaktivverdünner, Weichmacher, Lösungsmittel und andere Zusätze wie zum Beispiel Nanopartikel enthalten.

In einer vorteilhaften Ausgestaltung des Verfahrens wird das Aufbaumaterial für jede Schicht zunächst in flüssiger Form als gleichmäßige Schicht aufgetragen, in der flüssigen Form dann ortsselektiv bestrahlt und nach Bildung der verfestigten Bauteilbereiche der Schicht (erste feste Phase) in den verbleibenden Bereichen in die zweite Phase überführt. Diese Überführung kann durch gezielte aktive Kühlung der jeweiligen Schicht oder auch aufgrund der Umgebungs- bzw. Bauraumtemperatur erfolgen, die dann unterhalb der Erstarrungstemperatur des flüssigen Aufbaumaterials liegen muss.

In einer weiteren vorteilhaften Ausgestaltung wird das Aufbaumaterial ebenfalls für jede Schicht zunächst in flüssiger Form als zusammenhängende Schicht aufgetragen und anschließend vollflächig, d.h. über die gesamte Schicht, in die zweite feste Phase überführt. Die gesamte neu aufgetragene Schicht liegt dann in fester Form in der zweiten festen Phase vor. Dies kann wiederum durch aktive Kühlung oder auch aufgrund einer Bauraumtemperatur erfolgen, die unterhalb des Erstarrungspunktes der flüssigen Phase liegt.

Die vorgeschlagene Anordnung zur generativen Fertigung von Bauteilen umfasst einen Bearbeitungskopf, der eine Auftragsvorrichtung für den flächigen Auftrag des Aufbaumaterials auf eine Bearbeitungsfläche und eine Einrichtung für die Projektion oder Fokussierung elektromagnetischer Strahlung oder Teilchenstrahlung auf die Bearbeitungsfläche aufweist. Der Bearbeitungskopf ist vorzugsweise über der Bearbeitungsfläche bewegbar gelagert. Die Einrichtung für die Projektion oder Fokussierung elektromagnetischer Strahlung oder Teilchenstrahlung (Strahlführungs- und/oder Fokussiereinrichtung) ist so ausgebildet, dass sie eine ortsselektive Bestrahlung der Bearbeitungsfläche ermöglicht. Die Anordnung weist weiterhin eine Vorschubeinrichtung, durch die ein durch Übergang in eine feste Phase (zweite feste Phase) gebildeter Block verfestigten Aufbaumaterials entgegen einer Aufbaurichtung der Bauteile gefördert werden kann, und eine äußere Führung für den Block verfestigten Aufbaumaterials auf, entlang der der Block verfestigten Aufbaumaterials durch die Vorschubeinrichtung förderbar ist. Die Führung weist eine Eingangsöffnung, in deren Bereich die Bearbeitungsfläche liegt, und eine Ausgangsöffnung auf, über die der Block verfestigten Aufbaumaterials und/oder mit der Anordnung gefertigte Bauteile aus der Führung austreten oder herausgenommen werden kann bzw. können.

In einer vorteilhaften Ausgestaltung dieser Anordnung ist die Vorschubeinrichtung so ausgebildet, dass sie den Block verfestigten Aufbaumaterials durch bezüglich der Aufbaurichtung seitlich am Block an- oder eingreifende Elemente fördert. Vorzugsweise liegt die Ausgangsöffnung bei dieser Ausgestaltung der Eingangsöffnung gegenüber. Diese Ausgestaltung ermöglicht die kontinuierliche Fertigung der Bauteile durch kontinuierliche oder andauernde schrittweise Förderung des Blocks verfestigten Aufbaumaterials durch die Vorschubeinrichtung.

In einer alternativen Ausgestaltung ist die Ausgangsöffnung der Führung bezüglich der Aufbaurichtung seitlich angeordnet. Über diese seitliche Öffnung kann dann der Block verfestigten Aufbaumaterials herausgenommen, ausgestoßen oder ausgeworfen werden. Die Anordnung kann in dieser Ausgestaltung dann beispielsweise einen Auswurfmechanismus aufweisen, durch den der Block verfestigten Aufbaumaterials über die seitliche Ausgangsöffnung ausgestoßen werden kann. Bei dieser Ausgestaltung kann eine herkömmliche Bauplattform für den Vorschub des Blocks verfestigten Aufbaumaterials eingesetzt werden. Nach Fertigung einiger Bauteile wird der Produktionsprozess kurz unterbrochen und der Block verfestigten Aufbaumaterials mit diesen Bauteilen zur Ausgangsöffnung gefördert und über die Ausgangsöffnung ausgestoßen. Anschließend kehrt die Bauplattform sofort wieder in eine Ausgangsposition für den Start eines Bauprozesses zurück und ein neuer Bauprozess wird begonnen. Diese Ausgestaltung ermöglicht zwar keine kontinuierliche jedoch eine quasikontinuierliche Fertigung der Bauteile, lediglich unterbrochen durch den wiederholten Ausstoßprozess.

Die Führung kann bei der vorgeschlagenen Anordnung beispielsweise als Rohr beliebiger Querschnittsform, d.h. beispielsweise einer runden oder auch einer eckigen Querschnittsform, ausgebildet sein. Bei Benutzung einer seitlich an- oder eingreifenden Vorschubeinrichtung weist dieses Führungsrohr dann entsprechend seitliche Öffnungen für den Zugang der an- bzw. eingreifenden Elemente der Vorschubeinrichtung auf. Die Führung kann auch anstelle eines entsprechenden Rohrs durch nebeneinander in Aufbaurichtung verlaufende und voneinander beabstandete Rohrabschnitte oder auch durch Führungsschienen gebildet sein.

Mit dem vorgeschlagenen Verfahren und der zugehörigen Anordnung besteht die Möglichkeit, die additive Fertigung von Polymerfunktionsteilen von einem einzelnen Produktionsprozess in eine Kleinserien- oder Sortenfertigung zu überführen. Das Verfahren bzw. die Anordnung kann dabei kontinuierlich aus einem Material unterschiedliche Geometrien vom CAD aus werkzeugfrei fertigen. Das Verfahren und die zugehörige Anordnung lassen sich für alle Anwendungsgebiete einsetzen, in denen dreidimensionale Objekte durch generative Fertigung erzeugt werden sollen. Mögliche Anwendungen sind Kleinserien von polymeren Funktionsteilen: Vorserien, Maschinenkleinteile, Montagehilfen, Ersatzteile, verlorene Formen (Modelle für Schmuck, Hörgeräte oder Modelle in der Dentalmedizin). Die einzelnen Bauteile lassen sich beispielsweise mit Taktzeiten im Minutenmaßstab fertigen.

### Kurze Beschreibung der Zeichnungen

Das vorgeschlagene Verfahren und die zugehörige Anordnung werden nachfolgend anhand von Ausführungsbeispielen in Verbindung mit den Zeichnungen nochmals näher erläutert. Hierbei zeigen:
- Fig. 1: ein Beispiel für die Durchführung des Verfahrens anhand der Querschnittsdarstellung einer entsprechenden Anordnung;
- Fig. 2: einen Querschnitt senkrecht zur Aufbau- bzw. Förderrichtung durch den Bauraum mit der umgebenden Führung der Anordnung der Figur 1;
- Fig. 3: eine Aufsicht auf den Bauraum mit der umgebenden Führung der Anordnung der Figur 1;
- Fig. 4: vier Beispiele für Vorschubeinrichtungen zur Förderung des festen Materialblocks im Bauraum;
- Fig. 5: ein weiteres Beispiel für eine Vorschubeinrichtung zur Förderung des festen Materialblocks im Bauraum;
- Fig. 6: eine schematische Darstellung, die den Prozessbeginn des vorgeschlagenen Verfahrens illustriert;
- Fig. 7: ein Beispiel für einen modularen Aufbau einer Anordnung mit mehreren Produktionsmodulen gemäß der vorliegenden Erfindung;
- Fig. 8: eine schematische Darstellung der vorgeschlagenen Anordnung mit einer Einrichtung zur Wiederverwertung nicht belichteten Aufbaumaterials;
- Fig. 9: ein Beispiel für eine Verfahrensführung zur Integration eines Chips in die Bauteile;
- Fig. 10: eine Illustration für die raumfüllende Anordnung neuer Bauteile im Bauraumvolumen;
- Fig. 11: eine schematische Darstellung der Verfahrensführung einschließlich der Fertigungsplanung in einer Ausgestaltung des vorgeschlagenen Verfahrens;
- Fig. 12: eine schematische Darstellung einer Ausgestaltung der vorgeschlagenen Anordnung für eine quasikontinuierliche Fertigung;
- Fig. 13: eine schematische Darstellung einer weiteren Ausgestaltung der vorgeschlagenen Anordnung für eine quasikontinuierliche Fertigung; und
- Fig. 14: ein Beispiel für die Anordnung und den Aufbau der Dosier- und der Rakeleinheit in einer Ausgestaltung der vorgeschlagenen Anordnung.

### Wege zur Ausführung der Erfindung

Das vorgeschlagene Verfahren nutzt eine Technik zur generativen Fertigung von Bauteilen, wie sie in der WO 2016/008876 A1 beschrieben ist. Hierbei werden zwei Phasenübergänge eines flüssigen Photopolymers als Aufbaumaterial genutzt, um durch entsprechende Verfahrensführung den zusätzlichen Aufbau von Stützstrukturen zu vermeiden. Zum einen wird die photochemische Härtung des Photopolymers unter selektiver Belichtung mit geeigneter Strahlung wie bspw. UV-Licht genutzt, um schichtweise ein dreidimensionales Bauteil zu erzeugen. Zum anderen wird durch Kühlung ein zweiter Phasenübergang (flüssig-fest) des gleichen Photopolymers in dem das Bauteil umgebenden noch flüssigen Bereich genutzt, um durch die Verfestigung des umgebenden Aufbaumaterials die Bauteile im Volumen zu stützen. Dieser Übergang des Aufbaumaterials in die zweite feste Phase wird im Folgenden auch als Einfrieren und das entsprechend verfestigte Aufbaumaterial als gefrorenes Material oder gefrorene Matrix bezeichnet. Durch dieses Einfrieren des umgebenden Aufbaumaterials werden die durch Bestrahlung hergestellten Bauteile somit ohne zusätzliche Stützstrukturen stabilisiert. Darüber hinaus können bei diesem Verfahren Bauteile im gesamten Volumen des Bauraums platziert werden - ohne Kontakt zu irgendeiner Bauplattform - und somit die Anzahl der Bauteile je Druckprozess erhöht werden. Dies ist möglich, da jede gefrorene Schicht die Funktion einer neuen Bauplattform für Bauteile übernehmen kann.

Eine beispielhafte Photoharzformulierung (hier auf Acrylatbasis), deren Schmelzpunkt T_{M} zwischen den Temperaturen T₁ und T₂ liegt, ist eine Kombination aus Poly(ethylenglycol)methyletheracrylat (M_{N}=480g/mol; CAS 32171-39-4; T_{M:} 6-7°C) als die Verfestigung bestimmende Materialkomponente, Photoinitiator Diphenyl(2,4,6-trimethyl-benzoyl)phosphin oxid (z.B. 1 Massen-%) und dem Aborber Orasol^{®} Orange, welche bei T₁ (< 6°C) eine feste Phase und bei T₂ (z.B. Raumtemperatur) eine flüssige Phase ausbildet.

Bei dem vorgeschlagenen Verfahren wird nun diese Verfahrensführung genutzt, um kontinuierlich oder zumindest quasikontinuierlich Bauteile zu fertigen. Hierbei wird der durch das Einfrieren entstehende gefrorene Block des Aufbaumaterials als Grundlage für einen kontinuierlichen oder quasikontinuierlichen Vorschub genutzt. Dieser gefrorene Block wird bei dem vorgeschlagenen Verfahren durch eine Vorschubeinrichtung, die bezüglich der Vorschub- bzw. Aufbaurichtung seitlich an dem gefrorenen Block an- bzw. in diesen eingreift, entgegen der Aufbaurichtung ununterbrochen gefördert, so dass kontinuierlich neue Bauteile erzeugt werden können.

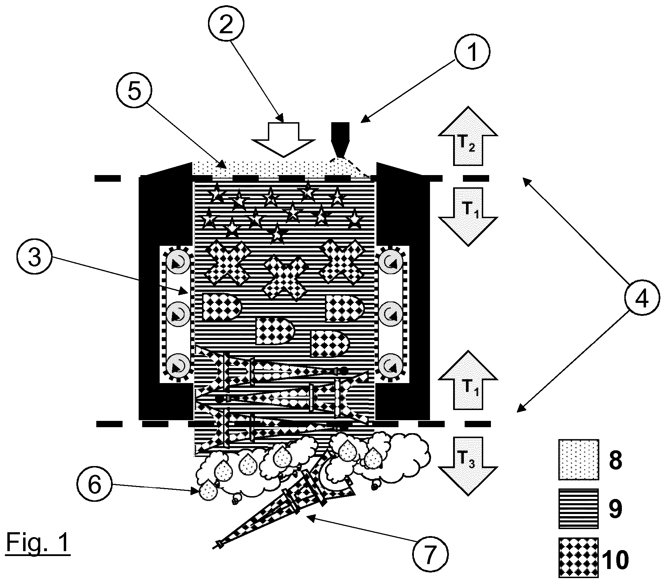

Figur 1 zeigt ein erstes Beispiel für die Durchführung des vorgeschlagenen Verfahrens, bei dem der gefrorene Block des Aufbaumaterials über eine geeignete Vorschubeinrichtung kontinuierlich nach unten bewegt wird. Von oben können dann immer neue Druckjobs zum Drucken bzw. Aufbau von Bauteilen begonnen werden, am unteren Ende des gefrorenen Blocks werden die Bauteile aus der gefrorenen Matrix befreit. Figur 1 zeigt einen Schnitt durch eine entsprechende Anordnung, aus dem diese Vorgehensweise ersichtlich ist. Die Anordnung weist eine in diesem Beispiel zylinderförmige äußere Führung 11 für den gefrorenen Block 9 auf, die das Bauraumvolumen umschließt. Die Anordnung ist in diesem Beispiel in drei Temperaturbereiche mit den Temperaturen T₁, T₂ und T₃ unterteilt, die in Abhängigkeit von dem genutzten Aufbaumaterial gewählt werden. Die Temperatur T₂ im oberen Bereich ist so gewählt, dass die in diesem Bereich mit einer Einheit 1 zum Dosieren und Glätten aufgebrachte Schicht 5 des Aufbaumaterials in flüssigem Zustand vorliegt. Durch selektive Belichtung in diesem Bereich der Temperatur T₂ mit Hilfe einer geeigneten Belichtungseinheit 2 kann das verwendete Photopolymer zur Generierung der Bauteile mittels strahlungsinduzierter Polymerisation bzw. Vernetzung in die ausgehärtete Phase überführt werden, um die Bauteile 7 schichtweise aufzubauen. Durch den Vorschub des darunter befindlichen gefrorenen Blocks 9 des Aufbaumaterials mit Hilfe der seitlich angreifenden Vorschubeinrichtung 3 wird diese außerhalb der Bauteilbereiche noch flüssige Schicht 5 dann in den Bereich der Temperatur T₁ gefördert, in dem das umgebende Aufbaumaterial in die zweite feste Phase übergeht, also eingefroren wird.

Die Darstellung der Figur 1 zeigt eine Situation während des kontinuierlichen Fertigungsprozesses. Durch den bereits vorhandenen Block 9 gefrorenen Aufbaumaterials ist jeweils ein Auftrag einer neuen Schicht 5 flüssigen Aufbaumaterials möglich. Der Aufbau eines (neuen) Bauteils auf einer gefrorenen Schicht ist möglich, so dass im laufenden Prozess prinzipiell keine Bauplattform erforderlich ist. Lediglich für den Start des Prozesses, d.h. zur Generierung der ersten Schichten, wird eine feste Unterlage oder Platte benötigt, weil ein fester Untergrund für den im Prozess notwendigen Schichtauftrag vorhanden sein muss. Sobald für den Rakelauftrag ein ausreichend stabiler Körper bzw. Block aus thermisch und photochemisch gehärtetem Material entstanden ist, kann die Platte aus dem Prozess entfernt werden. Jede neue gefrorene Schicht dient dann als Untergrund für eine nachfolgende Beschichtung, so dass eine kontinuierliche Bauweise realisiert werden kann. Es besteht auch die Möglichkeit, als Unterlage eine gefrorene Platte des Aufbaumaterials zu Prozessbeginn bereitzustellen, und damit vollständig auf eine Unterlage aus einem anderen Material zu verzichten. Eine derartige gefrorene Platte kann vorab durch geeignete Kühlung einer dickeren Schicht des Aufbaumaterials erzeugt werden. Eine Platte aus einem anderen Material kann beispielsweise auch nur kurzzeitig zu Beginn des Prozesses seitlich eingeführt und nach der Entstehung bzw. Bildung eines ausreichend dicken Blocks gefrorenen Aufbaumaterials wieder entfernt werden.

Die Figur 1 zeigt auch einen weiteren Temperaturübergang von der für das Einfrieren des Materials erforderlichen kühleren Temperatur T₁ auf eine höhere Temperatur T₃, durch die das Aufbaumaterial wieder in den flüssigen Zustand übergeht. Die Temperatur T₃ kann auch der Temperatur T₂ entsprechen. Die Temperaturübergänge 4 sind in der Figur durch die gestrichelten Linien angedeutet. Der Temperaturgradient von warm (T2) - kalt (T1) - warm (T3) ermöglicht dabei einen flüssigen Auftrag des Aufbaumaterials durch die Einheit zum Dosieren und Glätten 1 im ersten warmen Bereich (oben), den Vorschub eines festen Volumenelements im gefrorenen Zustand (gefrorener Block 9) im kalten Bereich (Mitte) und ein erneutes Aufschmelzen des gefrorenen Volumenelements bzw. Blocks 9 im zweiten warmen Bereich des Prozesses (unten). Durch das Verflüssigen des gefrorenen Blocks 9 beim Übergang in den Temperaturbereich mit der Temperatur T₃ wird das nicht für den Aufbau der Bauteile benötigte Aufbaumaterial verflüssigt und kann dadurch von den erzeugten Bauteilen abgetrennt werden, wie dies in der Figur 1 im unteren Teil schematisch angedeutet ist. Aus dieser Figur ist auch die Erzeugung der Bauteile 7 mit unterschiedlichen Geometrien ersichtlich, die unter möglichst guter Ausnutzung des Bauraumvolumens in den gefrorenen Block 9 eingebettet sind.

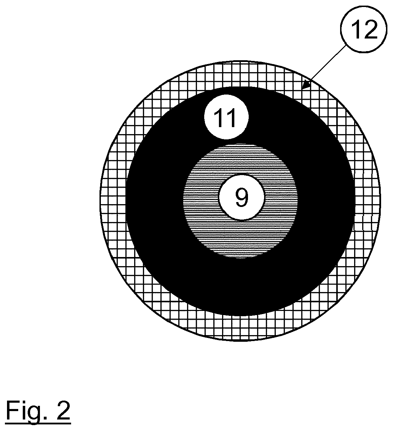

Figur 2 zeigt einen Querschnitt senkrecht zur Aufbaurichtung durch das Bauraumvolumen mit der umgebenden Führung 11. Innerhalb der Führung 11 ist hierbei eine Schicht des gefrorenen Blocks 9 erkennbar. Es handelt sich hierbei somit um einen Schnitt im Temperaturbereich T1 der Figur 1. Zur Kühlung wird im vorliegenden Beispiel ein Kühlmantel 12 eingesetzt, der um die Führung 11 herum ausgebildet ist. Die Kühlung kann mit unterschiedlichen Techniken erfolgen, vorzugsweise durch elektrische Kühlung (Peltier-Elemente) oder durch Flüssigkühlung.

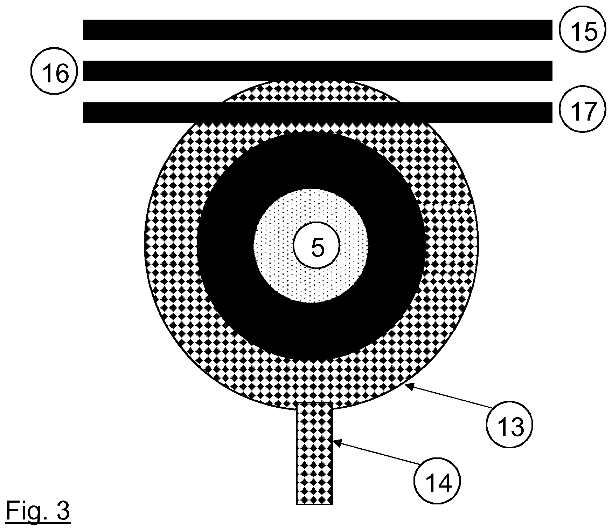

Figur 3 zeigt eine Aufsicht auf die Anordnung der Figur 1. Bei dieser Aufsicht ist der obere Teil der Führung 11 mit der darin aufgetragenen oberen Schicht 5 zu erkennen. Um diesen oberen Teil der Führung 11 herum ist ein Überlauf 13 für das flüssige Aufbaumaterial sowie ein Ablauf 14 für dieses Material zu erkennen. Der Überlauf 13 ist erforderlich, da das flüssige Material durch die Dosiereinheit 17 flüssig aufgetragen und dann durch die Rakeleinheit 16 geglättet wird. Bei dieser Glättung wird überschüssiges Material in den Überlauf 13 geschoben und kann über den Ablauf 14 ablaufen. In diesem oberen Bereich können auch weitere Einheiten 15 zum Erwärmen oder Kühlen angeordnet werden.

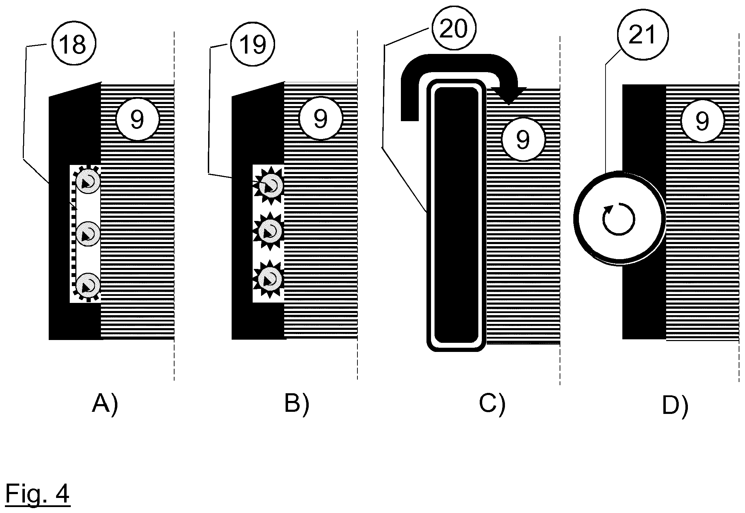

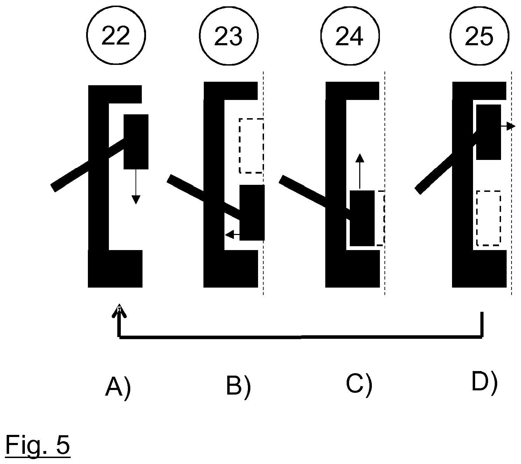

Der Vorschub des gefrorenen Blocks kann über verschiedene Technologien erfolgen. Die Figuren 4 und 5 zeigen Beispiele für geeignete Vorschubmechanismen. In Figur 4 sind hierzu in den Teilabbildungen A bis D vier beispielhafte Techniken dargestellt. Die Figur zeigt jeweils einen entsprechenden Teil der Führung 11 sowie den in der Führung durch die Vorschubeinrichtung geförderten Block 9 gefrorenen Aufbaumaterials. In der Teilabbildung 4A weist die Vorschubeinrichtung einen Zahnriemen 18 auf, der an dem gefrorenen Block 9 angreift und diesen bei entsprechender Bewegung des Zahnriemens 18 weiterbewegt. Figur 4B zeigt ein Beispiel einer Vorschubeinrichtung, bei der der gefrorene Block 9 über Zahnräder 19 gefördert wird, die an der Seite des gefrorenen Blocks 9 eingreifen. Figur 4C zeigt ein Beispiel, bei der die Vorschubeinrichtung durch einen um die Führung 11 - oder einen Teil der Führung 11 - umlaufenden Mantel 20 gebildet wird, der beispielsweise aus einem Gewebe oder einer gummiartigen Matte gebildet sein kann. Figur 4C zeigt schließlich einen Vorschub durch geeignet in die Führung 11 eingelassene rotierende Elemente, beispielsweise eine rotierende Walze 21.

Eine weitere Möglichkeit des Vorschubs besteht in der Nutzung einer geeigneten Zustelleinheit, wie sie in Figur 5 in vier verschiedenen Phasen dargestellt ist. In dieser Figur weist die Führung 11 eine geeignete Ausnehmung auf, innerhalb der die Zustelleinheit die in den vier Phasen angedeutete Bewegung durchführen kann. In diesem Beispiel wird in einer ersten Phase 22 ein gegen die Seite des gefrorenen Blocks gedrückter Stempel in Zustellrichtung (Pfeilrichtung) bewegt (Fig. 5A). In der nächsten Phase 23 wird der Stempel vom gefrorenen Block zurückgezogen (Fig. 5B) und in der anschließenden Phase 24 wieder in eine Ausgangsposition bewegt (Fig. 5C). In Phase 25 folgt dann die Bewegung des Stempels gegen den Materialblock (Fig. 5D). Durch wiederholtes Durchlaufen dieser Phasen kann somit der gefrorene Block in Vorschubrichtung weiterbewegt werden. Der Stempel der Zustelleinrichtung wird dabei über ein geeignetes Gestänge bewegt. Es können auch mehrere derartige Zustelleinrichtungen um die Führung 11 herum angeordnet sein.

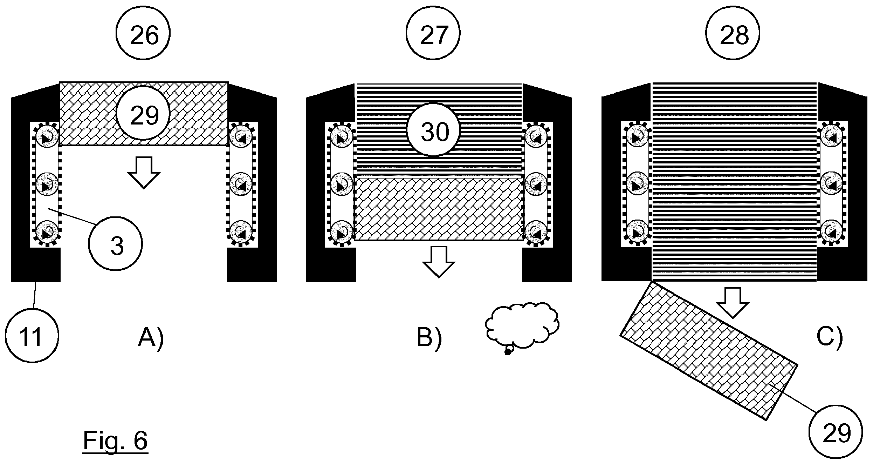

Figur 6 zeigt ein Beispiel für den Start des Druck- bzw. Fertigungsprozesses bei dem vorgeschlagenen Verfahren. In diesem Beispiel wird zunächst eine dicke Platte 29 in die Führung 11 eingesetzt, so dass sie über die Vorschubeinrichtung 3 in Pfeilrichtung gefördert werden kann (Fig. 6A). Anschließend wird mit dem Aufbau der Bauteile begonnen, wobei jeweils das umgebende nicht für den Bau der Bauteile genutzte Aufbaumaterial eingefroren wird, um einen festen Materialblock 30 zu bilden (Fig. 6B), der dem gefrorenen Block 9 der vorangehenden Figuren entspricht. Die gefertigten Bauteile sind hierbei ebenso wie die unterschiedlichen Temperaturzonen (vgl. Fig. 1) nicht dargestellt. Sobald der Bereich mit der Platte 29 durch die Förderung mit der Vorschubeinrichtung in den Bereich der höheren Temperatur gelangt, in dem das gefrorene Aufbaumaterial wieder in den flüssigen Zustand überführt wird, löst sich die Platte 29 und kann entfernt werden (Fig. 6C). Sie wird für die weitere kontinuierliche Fertigung dann nicht mehr benötigt.

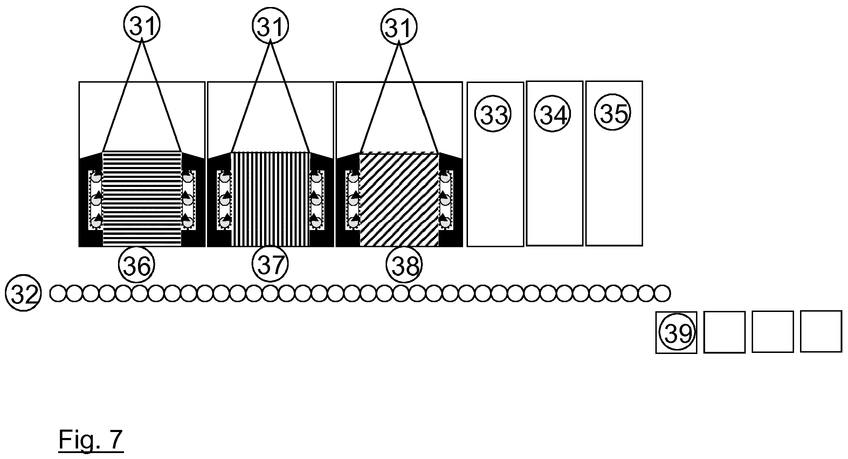

Die vorgeschlagene Anordnung kann auch modular eingesetzt werden. Figur 7 zeigt hierzu einen modularen Aufbau in einer Prozesskette mit mehreren Produktionsmodulen 36 bis 38, die jeweils entsprechend der vorgeschlagenen Anordnung ausgebildet sind. Im vorliegenden Beispiel sind hierbei drei dieser Produktionsmodule hintereinander geschaltet, die jeweils Belichtungseinheiten 31 mit gleichem oder unterschiedlichem Geometrieaufbau aufweisen. Die in der Figur dargestellten Produktionseinheiten 36 bis 38 können hierbei mit gleichem Material oder auch mit unterschiedlichem Material betrieben werden. Unterhalb der Produktionsmodule 36 bis 38 ist eine Fördereinheit 32 zur Förderung der nach Verflüssigung des gefrorenen Blocks herausfallenden Bauteile (vgl. Fig. 1) angeordnet. Diese Fördereinheit 32 ist so ausgebildet, dass das flüssige Aufbaumaterial durch die Fördereinheit hindurch in ein darunter liegendes Auffangbecken (nicht dargestellt) gelangen kann. Die Fördereinheit 32 bildet somit eine Art Sieb zum Abtrennen des flüssigen Aufbaumaterials. Die Bauteile werden wiederum durch die Fördereinrichtung 32 aufgenommen und entlang der Fördereinrichtung 32 zu Nachbearbeitungseinheiten transportiert. Bei diesen Nachbearbeitungseinheiten handelt es sich in diesem Beispiel um eine Wascheinheit 33, eine Einheit 34 zur Nachhärtung der Bauteile, beispielsweise mittels UV-Strahlung und/oder Temperaturbehandlung, und eine Einheit 35 zur Qualitätskontrolle. Die Wascheinheit 33 dient zur Reinigung der Bauteile mit einem Lösungsmittel und kann beispielsweise als Dusche, Bad oder Ultraschallbad ausgebildet sein. Die Qualitätskontrolle erfolgt vorzugsweise durch Scannen der Bauteile und Aussortieren von fehlerhaften Produkten. Dies kann beispielweise dadurch erfolgen, dass ein Scanner die fertigen Bauteile dreidimensional vermisst und mit einer Vorgabe vergleicht. Stimmt die Geometrie der Bauteile innerhalb vorgegebener Toleranzen mit der Vorgabe überein (Soll-Ist-Abgleich), so werden die Bauteile weiter gefördert. Tritt eine Abweichung ein, so werden die Bauteile aussortiert. Es erfolgt dann auch eine Rückmeldung, dass das aussortierte Bauteil neu gedruckt werden muss. Weiterhin besteht die Möglichkeit, einen Scanner für einen elektromagnetisch auslesbaren Chip einzusetzen, der in einer Ausgestaltung bei dem Verfahren in die Bauteile integriert wurde. Dies ermöglicht eine Identifikation bzw. Zuordnung der Bauteile, die dann entsprechend sortiert werden können. Alternativ zum elektromagnetisch auslesbaren Chip können bei der Fertigung auch Strich-, Zahlen- oder QR-Codes an den Bauteilen angebracht werden, um eine derartige Zuordnung zu ermöglichen. Diese werden dann durch den Scanner entsprechend ausgelesen. In einer sich anschließenden Sortiereinheit 39 werden dann die unterschiedlichen Produktgruppen entsprechend ihrer Charge sortiert und fehlerhafte Bauteile aussortiert.

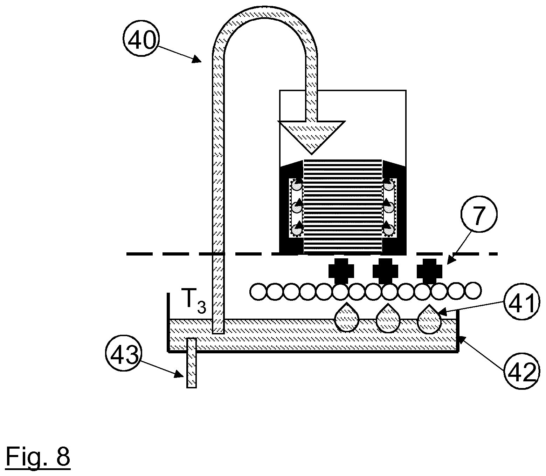

Figur 8 zeigt eine beispielhafte Darstellung der vorgeschlagenen Anordnung, in der auch die in Figur 7 beschriebene Fördereinheit 32 mit dem darunter befindlichen Auffangbecken 42 für durch Schmelzen im Temperaturbereich T₃ (vgl. Figur 1) abtropfendes Aufbaumaterial 41 erkennbar ist. In dieser Darstellung sind zwei Möglichkeiten für die Wiederverwertung des nicht belichteten Aufbaumaterials angedeutet. Zum einen kann das flüssige Aufbaumaterial aus dem Auffangbecken 42 über eine geeignete Leitung 40 mit Pumpe zurück in ein Vorratsbecken für den Auftrag frischen Aufbaumaterials gefördert werden. Eine weitere Möglichkeit besteht darin, das flüssige Aufbaumaterial über einen Abfüllstutzen 43 manuell abzulassen und für den Aufbau weiterer Bauteile rückzuführen.

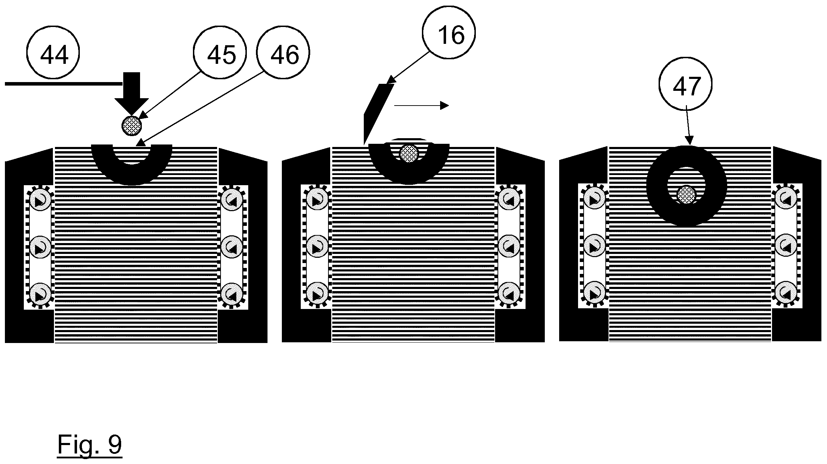

Prinzipiell können die gefertigten Bauteile während der Fertigung mit einem Label/Tag versehen werden, um sie später besser sortieren oder z.B. einem Kunden oder einem Produkt zuordnen zu können (vgl. auch Figur 7). Dies kann beispielsweise durch Drucken eines Strichcodes, eines Zahlencodes, eines QR-Codes oder Ähnlichem auf dem Bauteil erfolgen. Alternativ kann auch eine Art Fähnchen während der Fertigung an dem Bauteil eingefügt werden, auf den dieser eindeutige Code zur Identifizierung des Bauteils gedruckt wird. Diese Codierung und auch beispielsweise das Fähnchen können während der Fertigung durch geeignete Verfestigung des Bauteilmaterials durch Belichtung (erste feste Phase) als Strukturen am Bauteil erzeugt werden. Eine weitere Möglichkeit besteht darin, einen elektronisch auslesbaren Chip, einen RFID-Chip oder Ähnliches bei der Fertigung in das Bauteil zu integrieren. Diese Vorgehensweise ist schematisch in Figur 9 angedeutet. Der Chip 45 wird hierbei in einen Hohlraum bzw. eine Kavität 46 im Bauteil platziert. Das Bauteil 7 ist hierbei lediglich zur Veranschaulichung kugelförmig ausgebildet. Da in der Kavität 46 aufgrund des vorgeschlagenen Verfahrens gefrorenes Aufbaumaterial vorliegt, muss der Chip 45 vorher erwärmt werden, um ihn in der Kavität 46 mit dem darin enthaltenen gefrorenen Aufbaumaterial einsetzen zu können. Zum Einsetzen ist eine Platziereinheit 44 für den erwärmten Chip 45 vorgesehen. Der Chip wird während der Fertigung des Bauteils 7 in diese Kavität 46 des Bauteils eingesetzt, wie im mittleren Teil der Figur 9 zu erkennen ist. Überstehendes Aufbaumaterial wird dann mit Hilfe des Rakels 16 abgezogen. Nach Fertigstellung wird dadurch ein Bauteil 47 mit integriertem Chip erhalten. Anstelle eines Chips können selbstverständlich auch andere Elemente in dieser Art und Weise in das Bauteil integriert werden.

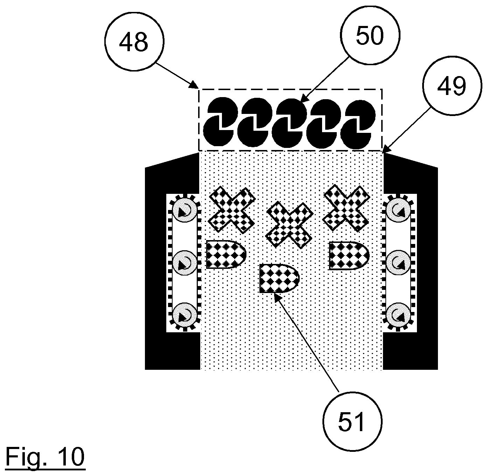

Für die Steuerung des Fertigungsprozesses wird vorzugsweise eine Software eingesetzt, über die die Fertigung, insbesondere die Anordnung der zu fertigenden Bauteile im Bauraumvolumen und auch die Reihenfolge der Fertigung festgelegt werden. Die Software ist vorzugsweise so ausgestaltet, dass sie während der Fertigung von Bauteilen jeweils neu zu fertigende Bauteile bzw. deren Daten entgegennimmt und geeignet in den Fertigungsprozess einführt. Die Software soll dabei ein automatisches "Nachschieben" von Bauteilen ermöglichen. Das kann dadurch realisiert werden, dass die Bauteile digital in einer Warteschlange angeordnet und dann in Abhängigkeit von ihrer Größe und ihrer Geometrie in ein freies Volumen des Bauraums platziert werden. Die Software kennt dabei die aktuell gefertigten und die jeweils folgenden Schichten der eingeplanten Bauteile und ordnet neue Bauteile entsprechend an. Dies ermöglicht eine raumfüllende Anordnung der Bauteile (dichte Packung), durch die der Durchsatz bei der Fertigung erhöht werden kann. Figur 10 zeigt hierzu ein Beispiel für eine raumfüllende Anordnung neuer Bauteile im Baumraumvolumen für anstehende Druckjobs. Die geplanten Bauteilschichten bzw. Bauteilvolumina 48 für anstehende Druckjobs sind mit der gestrichelten Linie über der zuletzt gefertigten Schicht 49 in der Figur angedeutet. Die bereits gedruckten Bauteile 51 liegen in diesem Beispiel bereits im gefrorenen Block vor. Die anschließend geplanten Objekte 50 werden in raumfüllender Anordnung in die geplanten Bauteilschichten bzw. das geplante Bauteilvolumen 48 platziert.

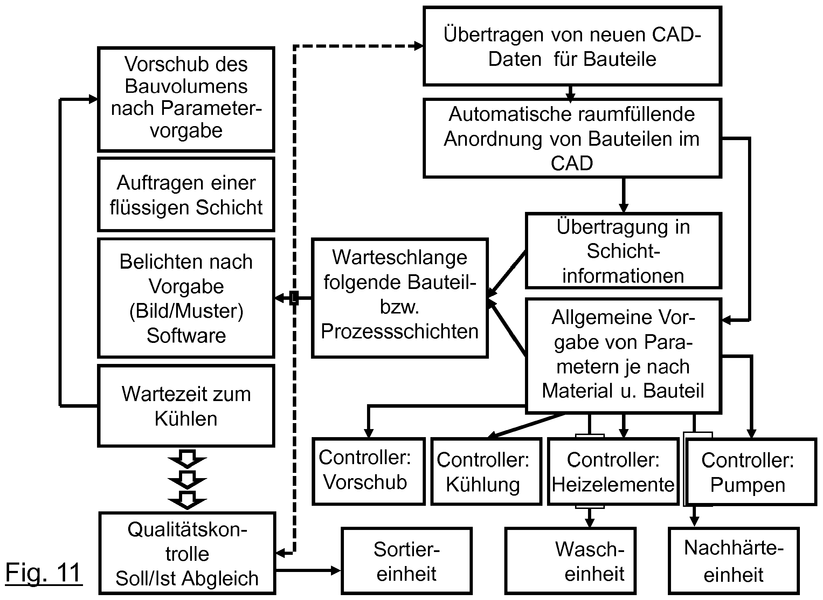

Figur 11 zeigt eine schematische Darstellung des Ablaufs des vorgeschlagenen Verfahrens einschließlich der Vorplanung durch die oben beschriebene Software für die Anordnung der Bauteile im Baumraumvolumen. Durch die diese Software enthaltende Steuerung werden auch die einzelnen Komponenten der Anordnung zur Fertigung der Bauteile angesteuert.

Für die Fertigung kann auch eine Prozessüberwachung eingesetzt werden, die z.B. den Vorschub oder die aktuelle Lage der jeweils letzten aufgebrachten Schicht des Aufbaumaterials bezüglich der Aufbaurichtung oder auch den Abstand dieser Schicht zu einer Referenzposition bestimmt. Dies kann über eine optische Abstandsmessung, eine mechanische Abstandsmessung oder auch durch Drucken eines geeigneten Encoders, beispielsweise eines Strichmusters an der Seite des gefrorenen Blocks erfolgen, der dann entsprechend durch eine Abtasteinheit ausgelesen wird. Auf diese Weise kann jederzeit die Position der einzelnen Bauteile oder auch die Schichtdicke der aufgebrachten Schichten überwacht werden.

Für den Vorschub des gefrorenen Blocks besteht auch die Möglichkeit, eine geeignete Struktur an der Seite des gefrorenen Blocks zu drucken, der die Kontrolle des Vorschubs verbessert. So kann z.B. eine Art Förderschiene eingedruckt, die den Eingriff von Zahnrädern für den Vorschub verbessert. Weiterhin könnten auch entsprechend verfestigte Bereiche als Anker beim Fertigungsprozess jeweils mit im gefrorenen Block erzeugt werden, die einen Teil der jeweiligen Querschnittsfläche oder auch die gesamte Querschnittsfläche umfassen. Die Erzeugung bzw. das Drucken dieser Strukturen erfolgt durch entsprechende Belichtung, d.h. den Übergang des Aufbaumaterials in die erste feste Phase.

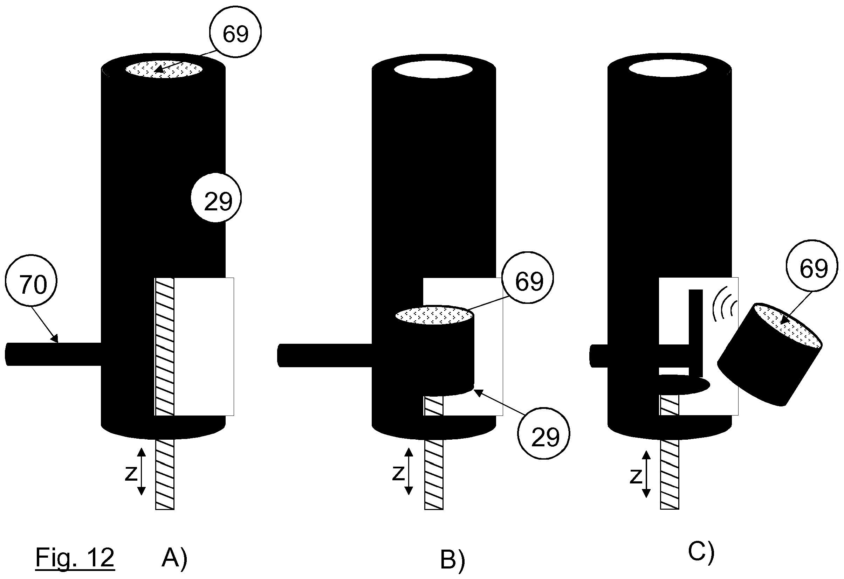

Die bisherigen Ausführungsbeispiele zeigten eine Ausgestaltung der Anordnung für eine kontinuierliche Fertigung. Es besteht jedoch auch die Möglichkeit einer quasikontinuierlichen Fertigung, bei der jeweils nach einer definierten Prozesszeit ein durch das Verfahren gefertigter Block gefrorenen Aufbaumaterials mit den darin befindlichen Bauteilen aus der Führung seitlich ausgeworfen und dann anschließend wieder verflüssigt wird, um die Bauteile vom Aufbaumaterial zu trennen. Ein erstes Beispiel für eine derartige Anordnung ist in Figur 12 dargestellt, die drei Phasen dieses Prozesses zeigt. In diesem Beispiel weist die Führung 11 am unteren Teil eine seitliche Öffnung auf, durch die ein entsprechender Block gefrorenen Aufbaumaterials nach Fertigstellung der Bauteile ausgeworfen werden kann. Diese Anordnung nutzt eine Bauplattform 29 zum Aufbau der Bauteile. Nach Fertigung der gewünschten Anzahl an Bauteilen (Fig. 12A) wird der gefrorene Block mit den Bauteilen durch die Bauplattform 29 nach unten bewegt (Fig. 12B) und durch einen seitlichen Auswerfer 70 aus der Öffnung ausgestoßen (Fig. 12C). Dadurch wird der Aufbauprozess unterbrochen und kann erst nach Rückkehr der Bauplattform 29 an den oberen Bereich der Führung 11 fortgesetzt werden. Durch die Möglichkeit des schnellen Auswurfes des gefrorenen Blocks wird hierfür jedoch nur sehr wenig Zeit benötigt, so dass der Aufbauprozess bereits kurz danach fortgeführt werden kann.

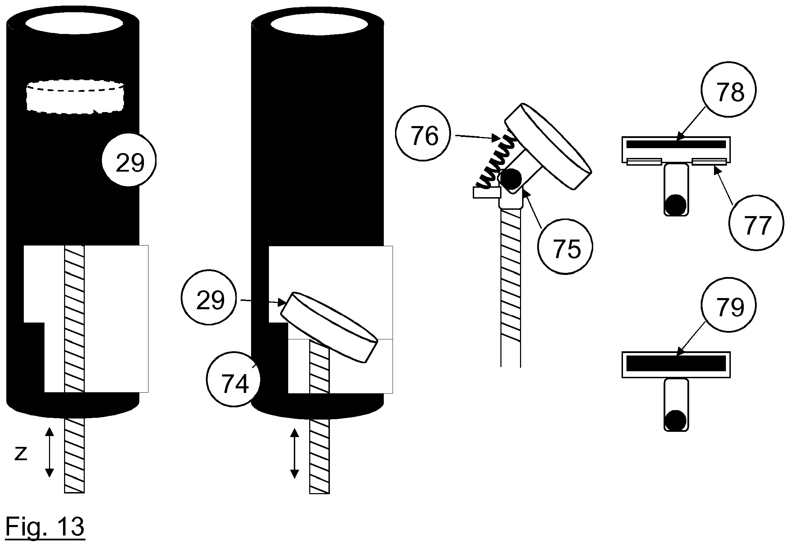

Figur 13 zeigt ein zweites Beispiel für eine Anordnung zur quasikontinuierlichen Fertigung, bei der die Bauplattform 29 kippbar und beheizbar ausgeführt ist. Im Gegensatz zur Ausgestaltung der Figur 12 ist bei diesem Beispiel kein seitlicher Auswerfer mehr erforderlich. Nach Fertigung der gewünschten Anzahl an Bauteilen wird der gefrorene Block mit den Bauteilen durch die Bauplattform 29 nach unten bewegt. Am unteren Ende der Führung 11 stößt die Bauplattform 29 gegen einen dort seitlich ausgebildeten mechanischen Anschlag 74 und kippt aufgrund des eingebauten Gelenks 75 zur seitlichen Öffnung hin. Durch gleichzeitiges Beheizen der Bauplattform über die integrierte Heizeinheit 78 (oder kombinierte Heiz-/Kühleinheit 79) löst sich der Block von der Bauplattform 29 und wird über die Öffnung ausgeworfen. Der rechte Teil der Figur zeigt das Gelenk 75 der Bauplattform 29 sowie eine Rückholfeder 76, mit der die Bauplattform bei Rückführung an die Startposition wieder in eine horizontale Lage gebracht wird, sowie eine in die Bauplattform integrierte Heizeinheit 78 und Kühleinheit 77 bzw. kombinierte Heiz-/Kühleinheit 79.

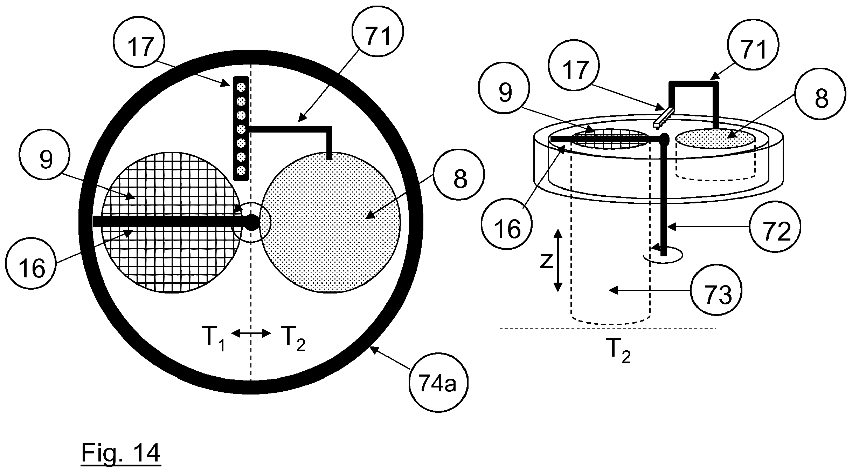

Figur 14 zeigt schließlich ein Beispiel für eine Ausgestaltung der Anordnung im oberen Bereich der Führung mit der Dosiereinheit 17 und der Rakeleinheit 16. Der linke Teil der Figur zeigt in Aufsicht das noch flüssige Aufbaumaterial 8 in einem Vorratsbecken sowie das innerhalb der Führung bereits gefrorene Material 9 im Bauraum. In dieser Darstellung bewegt sich die Rakeleinheit gerade über den Bauraum 73, während die Dosiereinheit 17 bereits für den Auftrag einer weiteren Schicht in Wartestellung ist. In diesem Beispiel werden zwei Temperaturbereiche für die Temperatur T₁ (Verfestigung des Aufbaumaterials) und die Temperatur T₂ (flüssiges Aufbaumaterial) im oberen Bereich der Führung aufrechterhalten. Die Dosiereinheit 17 ist mit einer Materialzuführungsleitung 71 verbunden, die gegebenenfalls auch beheizbar ausgeführt werden kann. Die Bewegung des Rakels der Rakeleinheit 16 erfolgt über einen Rotationsantrieb 72 wie er im rechten Teil der Figur in Seitenansicht dargestellt ist. In dieser Darstellung ist auch der Bauraum 73 für die kontinuierliche Fertigung angedeutet. Das Auffangbecken 74a für das von der Rakel 16 abgestrichene flüssige Aufbaumaterial ist in der Figur ebenfalls erkennbar.

Mit dem vorgeschlagenen Verfahren und den vorgeschlagenen Anordnungen wird eine kontinuierliche oder quasikontinuierliche Betriebsweise beim Drucken dreidimensionaler Bauteile ermöglicht. Es ist keinerlei Wechsel der Bauplattform mehr erforderlich, so dass auf entsprechendes Personal oder zusätzliche Geräte verzichtet werden kann. Das Verfahren ermöglicht eine hohe Stückzahl vom CAD hin zu fertigen Funktionsteilen. Durch die kontinuierliche Fertigung ist auch eine automatische Warteschlange von Bauteilen möglich (Drucken "on the fly"), in die jederzeit neu zu fertigende Bauteile aufgenommen werden können. Eine modulare Bauweise ermöglicht ein leichtes Upscaling und eine Produktion von Polymerteilen auch in höherer Stückzahl.

### Bezugszeichenliste

- 1: Einheit zum Dosieren und Glätten
- 2: Belichtungseinheit
- 3: Vorschubeinrichtung
- 4: Übergang in die nächste Temperaturzone (Gradient)
- 5: Flüssige Schicht des Aufbaumaterials
- 6: Abschmelzen der nicht bauteilzugehörigen Bereiche
- 7: Bauteile
- 8: Flüssiges Material
- 9: Gefrorenes Material/gefrorener Block
- 10: UV-gehärtetes Material (photopolymerisiert, photovernetzt)
- 11: Führung
- 12: Kühlmantel
- 13: Überlauf
- 14: Ablauf
- 15: Einheiten zum Erwärmen oder Kühlen
- 16: Rakeleinheit
- 17: Dosiereinheit
- 18: Zahnriemen
- 19: Zahnräder
- 20: Umlaufender Mantel
- 21: Rotierende Walze
- 22: Bewegung eines Stempels in Zustellrichtung
- 23: Entfernen vom Materialblock
- 24: Bewegung in Ausgangssituation
- 25: Erneutes Zustellen an Materialblock
- 26: Einsetzen der Platte
- 27: Absenken der Platte und erstes Füllen mit gefrorenen Schichten
- 28: Platte fällt heraus
- 29: Platte/Bauplattform
- 30: Fester Materialblock
- 31: Belichtungseinheiten
- 32: Fördereinrichtung
- 33: Wascheinheit
- 34: Nachhärteeinheit
- 35: Einheit zur Qualitätskontrolle
- 36-38: Produktionsmodule
- 39: Sortiereinheit
- 40: Leitung mit Pumpe
- 41: Abtropfendes Aufbaumaterial
- 42: Auffangbecken
- 43: Abfüllstutzen
- 44: Platziereinheit
- 45: Chip
- 46: Kavität
- 47: Bauteil mit integriertem Chip
- 48: Geplante Bauteilschichten/Bauteilvolumina
- 49: Letzte Schicht aus vorherigen Durchläufen
- 50: Geplante Bauteile
- 51: Bereits gefertigte Bauteile
- 69: Gefrorener Block
- 70: Auswerfeinrichtung
- 71: Materialzuführungsleitung
- 72: Antrieb für rotierende Rakeleinheit
- 73: Bauraum für kontinuierliche Förderung
- 74a: Auffangbecken
- 74: Fester Anschlag als Auswurf
- 75: Gelenk
- 76: Rückholfeder
- 77: Kühleinheit (z.B. Peltier)
- 78: Heizeinheit
- 79: kombinierte Heiz/Kühleinheit

## Patentansprüche

1. Verfahren zur generativen Fertigung von Bauteilen, bei dem die Bauteile (7) durch schichtweise Verfestigung eines Aufbaumaterials in einer Aufbaurichtung aufgebaut werden, das sich durch eine chemische Reaktion von einer flüssigen in eine erste feste Phase überführen lässt, wobei
- die schichtweise Verfestigung unter Bildung der ersten festen Phase jeweils durch ortsselektive Bestrahlung einer Schicht (5) der flüssigen Phase des Aufbaumaterials entsprechend der Bauteilgeometrie erfolgt,
- als Aufbaumaterial ein Material eingesetzt wird, das während der generativen Fertigung einen durch Abkühlung steuerbaren weiteren Phasenübergang zwischen der flüssigen Phase und einem festen Aggregatzustand als einer zweiten festen Phase durchführen kann, der die erste feste Phase nicht beeinflusst, und
- der weitere Phasenübergang während des Aufbaus der Bauteile (7) so gesteuert wird, dass unter Bildung der ersten festen Phase verfestigte Bauteilbereiche durch umgebendes Aufbaumaterial in der zweiten festen Phase gestützt werden,
**dadurch gekennzeichnet,**
**dass** ein durch den Übergang in die zweite feste Phase gebildeter Block (9) verfestigten Aufbaumaterials durch eine bezüglich der Aufbaurichtung seitlich am Block (9) an- oder eingreifende Vorschubeinrichtung (3) entgegen der Aufbaurichtung gefördert wird, um die Bauteile (7) schichtweise aufzubauen.

2. Verfahren nach Anspruch 1,
**dadurch gekennzeichnet,**
**dass** mehrere der Bauteile (7) in Aufbaurichtung übereinander aufgebaut werden.

3. Verfahren nach Anspruch 2,
**dadurch gekennzeichnet,**
**dass** der Block (9) verfestigten Aufbaumaterials während des Aufbaus der Bauteile (7) durch die Vorschubeinrichtung (3) schrittweise oder kontinuierlich gefördert wird.

4. Verfahren nach einem der Ansprüche 1 bis 3,
**dadurch gekennzeichnet,**
**dass** für den Start des Aufbauprozesses eine vorab durch Übergang in die zweite feste Phase gebildete Platte des Aufbaumaterials oder eine Platte (29) aus einem anderen Material genutzt wird, auf die das Aufbaumaterial dann in der flüssigen Phase aufgebracht und anschließend verfestigt wird.

5. Verfahren nach Anspruch 4,
**dadurch gekennzeichnet,**
**dass** das Aufbaumaterial schichtweise in der flüssigen Phase auf die Platte (29) oder bereits verfestigte Bereiche des Aufbaumaterials aufgebracht und vor oder nach Bildung der verfestigten Bauteilbereiche der jeweiligen Schicht in die zweite feste Phase überführt wird.

6. Verfahren nach einem der Ansprüche 1 bis 5,
**dadurch gekennzeichnet,**
**dass** das Aufbaumaterial jeweils vor der Bildung der verfestigten Bauteilbereiche in der jeweiligen Schicht vollflächig in die zweite feste Phase überführt und zur Bildung der verfestigten Bauteilbereiche lediglich ortsselektiv entsprechend der Bauteilgeometrie zunächst wieder in die flüssige Phase überführt wird.

7. Verfahren nach einem der Ansprüche 1 bis 6,
**dadurch gekennzeichnet,**
**dass** ein Aufbaumaterial eingesetzt wird, das bei einer Temperatur von 20°C flüssig ist.

8. Verfahren nach einem der Ansprüche 1 bis 7,
**dadurch gekennzeichnet,**
**dass** der Block (9) verfestigten Aufbaumaterials durch die Vorschubeinrichtung (3) in einen Bereich mit einer Temperatur gefördert wird, durch die das Aufbaumaterial von der zweiten festen Phase in die flüssige Phase überführt wird, um das flüssige Aufbaumaterial von den Bauteilen (7) zu trennen.

9. Verfahren nach einem der Ansprüche 1 bis 8,
**dadurch gekennzeichnet,**
**dass** in eines oder mehrere der Bauteile (7) während der Fertigung elektronische Chips (45) oder andere Kennzeichnungen integriert werden, über die die Bauteile (7) identifizierbar sind.

10. Anordnung zur generativen Fertigung von Bauteilen, mit
- einem Bearbeitungskopf, der eine Auftragsvorrichtung (1) für ein flächiges Aufbringen eines flüssigen Aufbaumaterials auf eine Bearbeitungsfläche aufweist,
- einer Einrichtung (2) für die Projektion oder Fokussierung elektromagnetischer Strahlung oder Teilchenstrahlung auf die Bearbeitungsfläche, die eine ortsselektive Bestrahlung der Bearbeitungsfläche ermöglicht,
- einer Vorschubeinrichtung (3), **dadurch gekennzeichnet, dass** durch diese ein durch Übergang in eine feste Phase gebildeter Block (9) verfestigten Aufbaumaterials entgegen einer Aufbaurichtung der Bauteile (7) gefördert werden kann, und
- einer äußeren Führung (11) für den Block (9) verfestigten Aufbaumaterials, entlang der der Block (9) verfestigten Aufbaumaterials durch die Vorschubeinrichtung (3) förderbar ist,
- wobei die Führung (11) eine Eingangsöffnung, in deren Bereich die Bearbeitungsfläche liegt, und eine Ausgangsöffnung aufweist, über die der Block (9) verfestigten Aufbaumaterials und/oder mit der Anordnung gefertigte Bauteile (7) aus der Führung (11) austreten oder herausgenommen werden kann/können.

11. Anordnung nach Anspruch 10,
**dadurch gekennzeichnet,**
**dass** die Vorschubeinrichtung (3) so ausgebildet ist, dass sie den Block (9) verfestigten Aufbaumaterials durch bezüglich der Aufbaurichtung seitlich am Block (9) an- oder eingreifende Elemente (18-21) fördert.

12. Anordnung nach Anspruch 11,
**dadurch gekennzeichnet,**
**dass** die Ausgangsöffnung der Eingangsöffnung gegenüber liegt.

13. Anordnung nach Anspruch 10,
**dadurch gekennzeichnet,**
**dass** die Ausgangsöffnung bezüglich der Aufbaurichtung seitlich angeordnet ist und die Anordnung einen Auswurfmechanismus (70) aufweist, durch den der Block (9) verfestigten Aufbaumaterials über die seitliche Ausgangsöffnung ausgestoßen werden kann.

14. Anordnung nach einem der Ansprüche 10 bis 13,
**dadurch gekennzeichnet,**
**dass** sie eine Kühlvorrichtung (12) aufweist, mit der das auf die Bearbeitungsfläche aufgebrachte flüssige Aufbaumaterial gekühlt und dadurch in die feste Phase überführt werden kann, um den Block (9) verfestigten Aufbaumaterials zu bilden.

15. Anordnung nach einem der Ansprüche 10 bis 14,
**dadurch gekennzeichnet,**
**dass** sie eine Heizvorrichtung (15) aufweist, die für eine ortsselektive oder eine flächige Erhitzung des auf die Bearbeitungsfläche aufgebrachten Aufbaumaterials ausgebildet ist.

16. Anordnung nach einem der Ansprüche 10 bis 15,
**dadurch gekennzeichnet,**
**dass** die Einrichtung (2) für die Projektion oder Fokussierung am Bearbeitungskopf angebracht oder in den Bearbeitungskopf integriert ist.

17. Anordnung nach einem der Ansprüche 10 bis 16,
**dadurch gekennzeichnet,**
**dass** der Bearbeitungskopf als Flächen-Beschichter ausgebildet ist.

18. Anordnung nach einem der Ansprüche 10 bis 17,
**dadurch gekennzeichnet,**
**dass** die Führung (11) durch ein Führungsrohr mit beliebiger Querschnittsform gebildet ist, in dem der Block (9) verfestigten Aufbaumaterials durch die Vorschubeinrichtung (3) förderbar ist.

19. Anordnung nach einem der Ansprüche 10 bis 18,
**dadurch gekennzeichnet,**
**dass** die Anordnung wenigstens einen Raumbereich einer ersten Temperatur und einen Raumbereich einer zweiten Temperatur aufweist, wobei die erste Temperatur auf einen Wert unterhalb und die zweite Temperatur auf einen Wert oberhalb einer Verfestigungstemperatur des Aufbaumaterials einstellbar ist, und der Block (9) verfestigten Aufbaumaterials durch die Vorschubeinrichtung (3), gegebenenfalls in Kombination mit einer Transporteinrichtung, vom Raumbereich der ersten Temperatur in den Raumbereich der zweiten Temperatur förderbar ist.

20. Anordnung nach einem der Ansprüche 10 bis 19,
**dadurch gekennzeichnet,**
**dass** die Anordnung Stationen zum Waschen (33), Nachhärten (34) und/oder optischen Abtasten (35) mit der Anordnung hergestellter Bauteile (7) aufweist.

21. Anordnung nach einem der Ansprüche 10 bis 20,
**dadurch gekennzeichnet,**
**dass** sie eine Steuerungseinheit aufweist, die zu fertigende Bauteile (50) platzsparend in einem Aufbauvolumen anordnet und die Anordnung entsprechend zur Fertigung der Bauteile ansteuert.

## Claims

1. Method for the additive manufacture of components in which the components (7) are constructed by layer-by-layer solidification of a construction material in a construction direction which can be transferred from a liquid into a first solid phase by a chemical reaction, wherein
- the layer-by-layer solidification takes place with the formation of the first solid phase in each case by positionally selective irradiation of a layer (5) of the liquid phase of the construction material according to the component geometry,
- a material is used as construction material which during the additive manufacture can undergo a further phase transition controllable by cooling between the liquid phase and a solid aggregate state as a second solid phase which does not influence the first solid phase and
- the further phase transition is controlled such during the construction of the components (7) that with the formation of the first solid phase solidified component regions are supported by surrounding construction material in the second solid phase,
**characterized in**
**that** a block (9) of solidified construction material formed by the transition into the second solid phase is conveyed contrary to the construction direction by an advancing device (3) which laterally approaches or engages the block (9) in relation to the construction direction in order to construct the components (7) in a layer-by-layer manner.

2. Method according to Claim 1,
**characterized in**
**that** a plurality of the components (7) are constructed one above the other in the construction direction.

3. Method according to Claim 2,
**characterized in**
**that** the block (9) of solidified construction material is conveyed by the advancing device (3) in a stepwise or continuous manner during the construction of the components (7).

4. Method according to one of Claims 1 to 3,
**characterized in**
**that** for the start of the construction process a plate of the construction material formed in advance by transition into the second solid phase or a plate (29) of a different material is used, onto which the construction material is then applied in the liquid phase and then solidified.

5. Method according to Claim 4,
**characterized in**
**that** the construction material is applied layer-by-layer in the liquid phase to the plate (29) or already solidified regions of the construction material and is transferred into the second solid phase before or after the formation of the solidified component regions of the respective layer.

6. Method according to one of Claims 1 to 5,
**characterized in**
**that** in each case before the formation of the solidified component regions in the respective layer the construction material is transferred into the second solid phase over the entire area and in order to form the solidified component regions is initially transferred back into the liquid phase only in a positionally selective manner according to the component geometry.

7. Method according to one of Claims 1 to 6,
**characterized in**
**that** a construction material which is liquid at a temperature of 20°C is used.

8. Method according to one of Claims 1 to 7,
**characterized in**
**that** the block (9) of solidified construction material is conveyed by the advancing device (3) into a region having a temperature by means of which the construction material is transferred from the second solid phase into the liquid phase in order to separate the liquid construction material from the components (7).

9. Method according to one of Claims 1 to 8,
**characterized in**
**that** electronic chips (45) or other identifiers are integrated into one or more of the components (7) during manufacture by means of which the components (7) can be identified.

10. Assembly for the additive manufacture of components, comprising
- a processing head which has an application device (1) for a planar application of a liquid construction material to a processing surface,
- a device (2) for the projection or focussing of electromagnetic radiation or particle radiation onto the processing surface which enables a positionally selective irradiation of the processing surface,
- an advancing device (3),
**characterized in**
**that** by means of which a block (9) of solidified construction material formed by transition into a solid phase can be conveyed contrary to a construction direction of the components (7) and
- an outer guide (11) for the block (9) of solidified construction material along which the block (9) of solidified construction material can be conveyed by the advancing device (3),
- wherein the guide (11) has an inlet opening in which region the processing surface is situated and an outlet opening via which the block (9) of solidified construction material and/or components (7) fabricated using the assembly can emerge or be removed from the guide (11).

11. Assembly according to Claim 10,
**characterized in**
**that** the advancing device (3) is configured so that it conveys the block (9) of solidified construction material by elements (18-21) which laterally approach or engage the block (9) in relation to the construction direction.

12. Assembly according to Claim 11,
**characterized in**
**that** the outlet opening lies opposite the inlet opening.

13. Assembly according to Claim 10,
**characterized in**
**that** the outlet opening is arranged laterally in relation to the construction direction and the assembly has an ejection mechanism (70) by means of which the block (9) of solidified construction material can be ejected via the lateral outlet opening.

14. Assembly according to one of Claims 10 to 13,
**characterized in**
**that** it comprises a cooling device (12) by means of which the liquid construction material applied to the processing surface can be cooled and thereby transferred into the solid phase in order to form the block (9) of solidified construction material.

15. Assembly according to one of Claims 10 to 14,
**characterized in**
**that** it comprises a heating device (15) which is configured for a positionally selective or a planar heating of the construction material applied to the processing surface.

16. Assembly according to one of Claims 10 to 15,
**characterized in**
**that** the device (2) for the projection or focussing is attached to the processing head or integrated in the processing head.

17. Assembly according to one of Claims 10 to 16,
**characterized in**
**that** the processing head is configured as a surface coater.

18. Assembly according to one of Claims 10 to 17,
**characterized in**
**that** the guide (11) is formed by a guide tube having an arbitrary cross-section in which the block (9) of solidified construction material can be conveyed by the advancing device (3).

19. Assembly according to one of Claims 10 to 18,
**characterized in**
**that** the assembly comprises at least a spatial region at a first temperature and a spatial region at a second temperature wherein the first temperature can be set to a value below and the second temperature can be set to a value above a solidification temperature of the construction material and the block (9) of solidified construction material can be conveyed by the advancing device (3), optionally in combination with a transport device, from the spatial region at the first temperature into the spatial region at the second temperature.

20. Assembly according to one of Claims 10 to 19,
**characterized in**
**that** the assembly comprises stations for washing (33), post-hardening (34) and/or optical scanning (35) of components (7) produced using the assembly.

21. Assembly according to one of Claims 10 to 20,
**characterized in**
**that** it comprises a control unit which arranges components (50) to be manufactured in a spacesaving manner in a construction volume and controls the assembly accordingly for the manufacturing of the components.

## Revendications

1. Procédé de fabrication additive de composants, dans lequel les composants (7) sont produits par solidification en couches dans une direction de construction d'un matériau de construction, qui peut être converti par une réaction chimique d'un liquide en une première phase solide, dans lequel
- la solidification en couches pour former la première phase solide a lieu par l'irradiation sélective localement d'une couche (5) de la phase liquide du matériau de construction selon la géométrie du composant,
- un matériau est utilisé comme matériau de construction, qui peut effectuer comme une deuxième phase solide lors de la fabrication additive, une transition de phase supplémentaire contrôlable par refroidissement entre la phase liquide et un état solide, qui n'affecte pas la première phase solide, et
- la transition de phase supplémentaire pendant la construction des composants (7) est contrôlée de telle manière que les zones de composants solidifiées lors de la formation de la première phase solide soient supportées par le matériau de construction environnant dans la deuxième phase solide,
**caractérisé en ce qu'**un bloc (9) de matériau de construction formé dans la deuxième phase solide est transporté par un dispositif d'avance (3) intervenant latéralement au bloc (9) par rapport à la direction de construction, en sens contraire à la direction de construction, pour construire les composants (7) en couches.

2. Procédé selon la revendication 1, **caractérisé en ce que** plusieurs des composants (7) sont construits les uns au-dessus des autres dans la direction de construction.

3. Procédé selon la revendication 2, **caractérisé en ce que** le bloc (9) de matériau de construction solidifié est acheminé par étapes ou en continu par le dispositif d'avance (3) pendant la construction des éléments (7).

4. Procédé selon une des revendications 1 à 3, **caractérisé en ce que** pour le démarrage du processus de construction, on utilise une plaque préalablement formée par passage dans la deuxième phase solide du matériau de construction ou une plaque (29) en un autre matériau, sur laquelle le matériau de construction est ensuite appliqué en phase liquide puis solidifié.

5. Procédé selon la revendication 4, **caractérisé en ce que** le matériau de construction est appliqué en couches en phase liquide sur la plaque (29) ou sur des zones déjà solidifiées du matériau de construction et avant ou après la formation des zones de composants solidifiés de la couche respective est passé à la deuxième phase solide.

6. Procédé selon une des revendications 1 à 5, **caractérisé en ce que** avant la formation des zones de composants solidifiés dans la couche respective, le matériau de construction est passé sur toute la surface à la deuxième phase solide et, pour la formation des zones de composants solidifiés, est ensuite repassé à la phase liquide de manière sélective seulement localement selon la géométrie du composant.

7. Procédé selon une des revendications 1 à 6, **caractérisé en ce qu'**on utilise un matériau de construction liquide à une température de 20 °C.

8. Procédé selon une des revendications 1 à 7, **caractérisé en ce que** le bloc (9) de matériau de construction solidifié est transporté dans une zone par le dispositif d'avance (3) à une température via laquelle le matériau de construction est passé de la deuxième phase solide à la phase liquide au liquide pour séparer le matériau de construction des composants (7).

9. Procédé selon une des revendications 1 à 8, **caractérisé en ce que** des puces électroniques (45) ou d'autres identifiants sont intégrés dans un ou plusieurs des composants (7) lors de la fabrication, grâce auxquels les composants (7) peuvent être identifiés.

10. Agencement pour la fabrication additive de composants, comportant
- une tête de traitement, qui comporte un dispositif d'application (1) pour une application plane d'un matériau de construction liquide sur une surface de traitement,
- un dispositif (2) pour la projection ou la focalisation du rayonnement électromagnétique ou du rayonnement de particules sur la zone de traitement, ce qui permet une irradiation sélective localement de la zone de traitement,
- un dispositif d'avance (3), **caractérisé en ce que** le matériau de construction solidifié peut être transporté en sens contraire à une direction de construction des composants (7) au moyen de ce bloc (9) formé par transition dans une phase solide, et
- un guide extérieur (11) pour le bloc (9) de matériau de construction solidifié, le long duquel le bloc (9) de matériau de construction solidifié peut être transporté par le dispositif d'avance (3),
- dans lequel le guide (11) présente une ouverture d'entrée, au niveau de laquelle se situe la surface de traitement et présente une ouverture de sortie, à travers laquelle le bloc (9) de matériau de construction solidifié et/ou de composants (7) fabriqués avec le dispositif peut/peuvent être retiré(s) du guide (11).

11. Agencement selon la revendication 10, **caractérisé en ce que** le dispositif d'alimentation (3) est conçu de telle manière qu'il transporte le bloc (9) de matériau de construction solidifié par des éléments (18-21) intervenant latéralement au bloc (9) par rapport à la direction de construction.

12. Agencement selon la revendication 11, **caractérisé en ce que** l'ouverture de sortie fait face à l'ouverture d'entrée.

13. Agencement selon la revendication 10, **caractérisé en ce que** l'ouverture de sortie est agencée latéralement par rapport à la direction de construction et l'agencement présente un mécanisme d'éjection (70), via lequel le bloc (9) de matériau de construction solidifié peut être éjecté via l'ouverture de sortie latérale.

14. Agencement selon une des revendications 10 à 13, **caractérisé en ce qu'**il comporte un dispositif de refroidissement (12), avec lequel le matériau d'accumulation liquide appliqué sur la surface de traitement peut être refroidi et ainsi passé en phase solide, pour former un bloc (9) de matériau de construction solidifié.

15. Agencement selon une des revendications 10 à 14, **caractérisé en ce qu'**il comporte un dispositif de chauffage (15) qui est utilisé pour un chauffage sélectif localement ou planaire sur le matériau de construction appliqué sur la surface de traitement.

16. Agencement selon une des revendications 10 à 15, **caractérisé en ce que** le dispositif (2) de projection ou de focalisation est fixé à la tête de traitement ou intégré dans la tête de traitement.

17. Agencement selon une des revendications 10 à 16, **caractérisé en ce que** la tête de traitement est réalisée sous la forme d'une coucheuse de surface.

18. Agencement selon une des revendications 10 à 17, **caractérisé en ce que** le guide (11) est formé par un tube guide avec une forme de section transversale quelconque, dans lequel le bloc (9) de matériau de construction solidifié peut être acheminé par le dispositif d'avance (3).

19. Agencement selon une des revendications 10 à 18, **caractérisé en ce que** l'agencement présente au moins une zone spatiale ayant une première température et une zone spatiale ayant une deuxième température, dans lequel la première température peut être réglée à une valeur inférieure et la deuxième température à une valeur supérieure à une température de solidification du matériau de construction, et le bloc (9) de matériau de construction solidifié peut être transporté par le dispositif d'avance (3), le cas échéant en combinaison avec un dispositif de transport, de la zone spatiale de la première température à la zone spatiale de la deuxième température.

20. Agencement selon une des revendications 10 à 19, **caractérisé en ce que** l'agencement présente des postes de lavage (33), de post-durcissement (34) et/ou de balayage optique (35) des composants (7) fabriqués avec le dispositif.

21. Agencement selon une des revendications 10 à 20, **caractérisé en ce qu'**il présente une unité de commande, qui dispose les composants à fabriquer (50) de manière peu encombrante dans un volume de construction et contrôle l'agencement en conséquence pour la production des composants.
